# EUROPEAN PATENT APPLICATION

(11) **EP 4 721 835 A1**
(43) Date of publication of application: **08.04.2026**
(21) Application number: 25207127.9
(22) Date of filing: 07.10.2025
(51) Int. Cl.: B01D 46/00, B01D 46/24, B01D 46/44, B01D 46/64

(54) **DEVICE FOR FILTERING AIR AND CREATING AN OVERPRESSURE IN A CLOSED OR SEMI-CLOSED SPACE**

(30) Priority: 07.10.2024 NL 2038789
(71) Applicant: BMAir International B.V., 4941 SG Raamsdonksveer (NL)
(72) Inventor: MOLS, Guido, 4941 SG Raamsdonksveer (NL)
(74) Representative: Patentwerk B.V.

(57) **Abstract**

The invention relates to a device for filtering air and creating an overpressure in a closed or semi-closed space, comprising at least one housing, comprising at least one air inlet and at least one air outlet, at least one ventilator for taking in air in particular via the at least one air inlet, at least one filter for filtering air which is drawn into the device, wherein the at least one ventilator and the at least one filter are received within the at least one housing and wherein the at least one housing is configured such that air drawn into the device by the at least one ventilator is pushed through the at least one filter towards the at least one air outlet.

## Description

The invention relates to a device for filtering air and creating an overpressure in a closed or semi-closed space. The invention further relates to a method for filtering air and creating an overpressure in a closed or semi-closed space.

Air filtration and pressurization systems are widely used in various applications to provide clean air and maintain a controlled environment. These systems are particularly important in closed or semi-closed spaces where air quality and pressure control are critical, such as in (agricultural) vehicles, industrial facilities, and/or medical settings. Conventional air filtration and pressurization devices typically consist of separate components, including a housing, a ventilation unit, and air filters. **In** many existing systems, the ventilation unit and air filters are designed as standalone units that are optionally assembled together within a housing. This approach may result in bulky systems that can be challenging to install and maintain, especially in spaces with limited room. Additionally, the separation of components may lead to inefficiencies in airflow and potential air leakage between different parts of the system. Often, those systems are found to be inefficient in energy consumption and/or use of the capacity of the individual units.

Some current air filtration and pressurization devices may face difficulties in achieving optimal airflow distribution. These systems may struggle to maintain consistent air pressure and filtration efficiency across the entire filter surface, which may lead to reduced overall performance and shorter filter lifespans. Furthermore, the design of air inlets and outlets in existing devices may not always promote laminar airflow, which can potentially impact the system's efficiency and noise levels. Maintenance and filter replacement in conventional systems may also present challenges. Some designs may make it difficult to access and replace filters, potentially leading to increased downtime and errors during maintenance procedures.

In light of these considerations, there is demand to develop a device which overcomes at least part of the abovementioned drawbacks.

The invention provides thereto a device for filtering air and/or creating an overpressure in a closed or semi-closed space, said device comprising:
- at least one housing comprising at least one air inlet and at least one air outlet;
- at least one ventilator for drawing or taking in air in particular via the at least one air inlet; and
- at least one filter for filtering air which is drawn into the device;
wherein at least one ventilator and at least one filter are received within the at least one housing, and wherein at least part of the at least one filter defines and/or encloses at least one air channel and wherein the at least one housing, and in particular the interior of the at least one housing, is configured such that air drawn into the device by the at least one ventilator is pushed through the at least one filter into the air channel towards the at least one air outlet.

The device according to the invention has several benefits over conventional devices or systems for filtering air and creating an overpressure in a closed or semi-closed space. The integrated configuration enables an efficient air flow through the device. By incorporating the ventilator and filter within a single housing, the device may achieve a more compact and easily installable form factor compared to conventional systems with separate components. The configuration, wherein the filter defines and/or encloses at least one air channel and the housing is designed to push air through the filter into this air channel towards the air outlet, promotes more efficient and directed airflow and optimal use of the capacity of the at least one ventilator. The configuration of the device according to the present invention enhances filtration efficiency and enables regulation of the air flow for creating an overpressure in a closed or semi-closed space in a relatively simple manner. It is beneficial that at least one ventilator and at least one filter are received and/or positioned within the at least one housing and because at least part of the at least one filter defines and/or encloses at least one air channel and the at least one housing, and in particular the interior of the at least one housing, is configured such that air drawn into the device by the at least one ventilator is pushed through the at least one filter into the air channel towards the at least one air outlet, an effective way of displacement of air within the device is obtained.

The device is in particular configured to create overpressure in closed or semi-closed spaces, making it versatile for various applications where maintaining a controlled environment is crucial. The device according to the present invention may find applications in a wide range of settings where air quality control and overpressure are crucial. It could be particularly useful in vehicles, such as cars, trucks, agricultural machinery, and/or construction equipment, where maintaining a clean air environment for operators is essential. The closed or semi-closed space may for example be a cabin of a vehicle, such as an agricultural and/or industrial vehicle. The semi-closed and/or closed space can also be a closable space. The device may also be valuable in industrial settings, including manufacturing plants, clean rooms, and laboratories, where air purity is critical for processes or worker safety. In the medical field, it could be applied in hospitals, clinics, or mobile medical units to create sterile environments or isolation areas. The device may also be suitable for use in residential or commercial buildings, especially in areas with high pollution levels or for individuals with respiratory sensitivities. Additionally, it could find applications in marine vessels, aerospace, military equipment, or any enclosed space where protection from external contaminants and maintenance of a controlled environment is necessary. The compact and integrated nature of the device may make it particularly advantageous in situations where space is limited or where easy installation and maintenance are important factors. The device is preferably configured to be positioned such that outside air is drawn into the device and filtered air is blown into the (semi-)closed space. The outside air is air from the environment of the closed or semi-closed space.

Conventional devices for the same purpose typically experience several practical and technical problems. It is for example a challenge to keep the flow of filtered air in the closed or semi-closed space sufficiently high. It also a challenge to reduce the air flow through the filter whilst keeping the (semi-)closed space at a desired overpressure. As used herein, the term "overpressure" may refer to a condition where the air pressure inside a closed or semi-closed space is maintained at a level higher than the ambient air pressure outside that space. This pressure differential may be created by introducing filtered air into the space at a rate that exceeds any air leakage or intentional exhaust from the space. Overpressure may help prevent the ingress of unfiltered air, contaminants, or particles from the outside environment into the controlled space. The magnitude of overpressure may vary depending on the specific application and requirements, but typically ranges from a slight positive pressure to several pascals above the ambient pressure.

The device is typically configured to provide a predetermined air flow of filtered air into the (semi-)closed space and/or to create a predetermined overpressure in said space. The device can for example be configured to create an overpressure in the range of 100-1500 Pa, for example in the range of 200-500 Pa, 400-800 Pa, 600-1200 Pa or combinations thereof. The desired overpressure may depend on the design and/or purpose of the closed space and/or on governmental regulations. The device according to the invention may further be configured to realize an air flow of in the range of 25-250 m3/h for example in the range of 50-150 m3/h or 40-120 m3/h. The desired air flow of the device may also depend on (local) regulations. It is for example possible that the device is configured to realize an air flow of at most 125 m3/h, in particular at most 100 m3/h, more in particular at most 75 m3/h. The device according to the invention is in particular configured to effectively use the capacity of the at least one ventilator. Devices according to the prior art in the field of the invention typically have the drawback that the ventilators applied only use a small part of their capacity. This can be the result of the rotational speed of the ventilator being based on the desired end pressure in the cabin instead of the desired air flow. The device according to the invention is designed such that the efficient operation of the device is possible whilst working at a controlled air flow. The air flow is regulated by the operation speed of the at least one ventilator, which can for example be in the range of 500-6000 rpm. It is possible that the rotational speed of the at least one ventilator is at least 2000 rpm and/or at most 5000 rpm.

The configuration of the device according to the invention enables that the capacity of the at least one ventilator can be effectively utilized. The clever positioning of the at least one ventilator within the housing further enables that the air flow within the device is optimized in both throughput and the type of flow, which is preferably laminar. This leads to an effective and efficient filtering and an optimized flow of expelled filtered air. The pressure, in particular the static back pressure, in the entire system, defined by the device and the (semi-)closed space is determined by the configuration of the device, the amount of contamination of the filter(s), the dimensions of the air inlet and/or air outlet and/or the degree of sealing of the space. In a non-limiting example, the total static back pressure is in the range of 450-800 Pa, but depending on the variables such as a longer outlet tube and/or contamination of the filter the total static back pressure can have a value up to 2000 Pa.

In a possible embodiment of the device, at least part of the at least one housing is substantially cylindrically, tubularly, spherically and/or conically shaped. It is for example possible that at least part of the housing, for example part of the housing enclosing the at least one filter is substantially cylindrically and/or conically shaped. Preferably, at least the inner volume of the at least one housing is cylindrical and/or conical. The cylindrical and/or conical shape of the housing may provide several benefits. This design may promote efficient air flow by reducing turbulence and creating a smooth path for air to travel through the device and in particular towards the filter into the air channel thereof. The cylindrical inner volume may help distribute air evenly across the filter surface, thereby improving filtration efficiency. Additionally, this shape may allow for compact and space-efficient design, which could be advantageous in applications where size constraints are a concern. Preferably, at least one air channel is configured such that air enters the air channel via the (circumferential and/or outer) side wall(s) thereof which is formed by at least one filter. At least one air channel may be closed at a first distal end, for example by means of part of the housing. At least one further distal end may extend into at least one air outlet and/or an intermediate air channel.

It is also possible that at least part of at least one filter is substantially cylindrical, tubular and/or conical. The at least one filter being a cylindrical, tubular, spherically and/or conical filter may complement the housing shape, potentially maximizing the filter surface area within the given volume. This shape may also promote even air distribution across the filter surface, which could enhance filtration efficiency and extend filter life. The substantially cylindrically and/or conically shaped filter may also enable the formation of at least one air channel in an efficient manner. It is for example possible that the filter forms a cylinder around the at least one air channel. At least one air channel may also be defined by the cylindrical and/or conical configuration of at least one filter. In an alternative embodiment, the at least one filter could be a spiral filter or a spirally shaped filter. The at least one air channel can be formed by the gaps formed between the spiral character of the at least one filter.

The housing may have an inner surface and an outer surface and/or the at least one filter may have an outer surface and an inner surface. In a possible embodiment, the outer surface of the at least one filter is positioned at a distance from the inner surface of the at least one housing. There may be a cylindrical and/or conical volume, or a ring shaped volume, defined between at least part of the inner surface of the housing and the outer surface of at least part of the filter. Designing the filter with an outer surface that corresponds to the interior of the housing may maximize the contact surface between the incoming air and the filter media. This configuration may also help ensure that all incoming air passes through the filter, potentially improving overall filtration efficiency. Additionally, this configuration may create an air volume or air channel between the filter and the housing, which could help maintain consistent air flow towards the outlet. In particular, air drawn into the device by the at least one ventilator is pushed through the at least one filter into the air channel thereof towards the at least one air outlet. At least one filter may comprise at least one HEPA filter. HEPA filters are known for their superior filtration capabilities, removing a high percentage of airborne particles. At least one filter may also be formed by a HEPA filter. The use of a HEPA filter could be particularly beneficial in applications where air quality is critical, such as in medical facilities, clean rooms, or environments with hazardous airborne contaminants.

In a possible embodiment, at least part of at least one air inlet extends over a circumference of the at least one housing. Extending at least part of the air inlet over the circumference of the housing may offer improved air intake capabilities. It is for example possible that at least one air inlet is a radial air inlet in particular configured to draw air into the device from a radial orientation. A circumferential and/or radial air inlet design may help create a laminar effect of the drawn in air, potentially reducing turbulence and/or noise. The circumferential inlet may also allow for a larger intake area, which could improve overall air flow and/or reduce the strain on the at least one ventilator. Furthermore, this design may facilitate easier centering of the ventilator and/or filter(s), which could simplify maintenance and ensure proper filter placement. Possibly, at least part of at least one air inlet is formed by a radially extending slit formed by at least part of the at least one housing. Forming the air inlet as a radially extending slit in the housing may further enhance the laminar flow effect. This design may help distribute incoming air evenly around the circumference of the device, potentially reducing hotspots and ensuring uniform air flow within the device. The slit design may also contribute to noise reduction by minimizing air turbulence at the intake point. At least one air inlet may be positioned at an opposing side of the ventilator as the at least one filter. In this way the ventilator can effectively draw the air into the housing and push it subsequently through the at least one filter. This design may also promote a laminar airflow effect, potentially improving overall efficiency. Optionally, the at least one air inlet may be configured such that water ingress while allowing radial air intake is prevented. It is possible that at least part of the housing is formed such that a shielding element is formed over at least part of the air inlet.

At least one ventilator is preferably configured to draw air into the interior of the housing and/or to release air of the device via at least one air outlet. Possibly, at least one ventilator is an axial ventilator. An axial ventilator benefits of providing an efficient airflow in a compact design. The at least one axial ventilator can be configured to draw in air directly or indirectly from at least one air inlet. Alternatively, at least one ventilator may be a radial ventilator. At least one ventilator preferably comprises at least one fan blade and more preferably multiple fan blades. Preferably, the ventilator and in particular the fan blades thereof are designed to optimize the air flow within the device and/or to create a desired flow rate of expelled filtered air. It is for example possible that the design of the ventilator is optimized for a system flow rate, or output flow rate of 40-120 m3/hr of filtered air in particular with a high static counter pressure. This design approach, considering variables such as diameter, rpm, and number of blades, can be optimized based on the intended purpose. At least part of the fan blades may be positioned under an angle such that drawn in air is guided towards the outer circumference of the interior of the at least part of the at least one housing, in particular the part of the at least one housing surrounding the at least one filter. The fan blades may for example be positioned such that they guide air towards the outer circumferential surface of the interior of the at least one housing. In this way, the air can be effectively pushed through the at least one filter. It is also possible that the angled fan blade configuration enables to create a more uniform airflow pattern, potentially improving filtration efficiency and/or reducing noise. It is for example possible that at least part of the fan blades, and preferably all fan blades are positioned under an angle of at least 3 degrees, preferably at least 4 degrees or at least 10 degrees. It is also possible that at least part of the fan blades are substantially curved. At least part of the fan blades may optionally be substantially flexible. This could further contribute to obtain the desired air flow and/or directions of the air flow within the device. At least one ventilator may further comprise at least one hub. The hub may provide further stability to the ventilator. At least part of the ventilator may comprise multiple through holes. At least one hub and/or at least one fan blade may comprise at least one through hole and preferably multiple through holes. The through holes may be configured for air passage. Relatively small volumes of air may pass through the through hole when the device is in operation. The through holes may help balance the fan, reduce weight, and potentially create additional airflow patterns that could enhance overall system performance. It is for example possible that the ventilator comprises at least 5 through holes, preferably at least 10 through holes. The through holes may be evenly divided over the hub and/or the fan blades. At least part of the through holes may be substantially circular. It is possible that at least part of the through holes has a diameter of at least 1 mm, preferably 2.5 mm, more preferably at least 3 mm and even more preferably at least 3.5 mm. It is also possible that at least part of the through holes has a maximum diameter of at most 8 mm, preferably at most 6 mm more preferably at most 4 mm. The at least one ventilator can be driven via at least one shaft. At least one shaft may or may not form integral part of the at least one ventilator.

In a beneficial embodiment, the device comprises at least one barrier element positioned at a distance from the at least one ventilator. It is for example possible that at least one barrier element is positioned substantially parallel to the ventilator, and in particular the hub and/or fan blades of the ventilator. At least one barrier element is preferably positioned at an opposing side of the ventilator than the side where air is drawn into the ventilator. A plane defined by a surface of the at least one barrier element facing the ventilator may be substantially parallel to the (outer surface of the) ventilator, and in particular the hub and/or fan blades of the ventilator. It is for example possible that at least part of at least one barrier element extends substantially parallel with respect to at least part of at least one ventilator, in particular at a backside thereof. At least one barrier element could for example comprise a barrier plate or may be formed by a barrier plate. At least one barrier element preferably comprises at least one solid and/or uninterrupted surface. It is for example possible that at least part of the at least one barrier element is formed by a solid plate. At least part of the barrier element facing the at least one ventilator is preferably substantially flat. At least one barrier element can be configured for guiding air within the device and/or for enabling balances rotation of the ventilator. It was experimentally found that the use of at least one barrier element can optimize the balancing properties of the device. For example when the at least one barrier element is applied in combination with the at least one hub and/or at least one fan blade comprising at least one through hole and preferably multiple through holes, it was found that the balance of the system was significantly improved. The at least one barrier element according to the invention is relatively simple, which is beneficial from manufacturing point of view. This resulted in that no additional balancing equipment has to be applied and/or that cumbersome balancing actions, for example by applying weights to the fan blades, have to be performed. Balancing is often required for ventilators when they are operating at high capacity. The barrier element, possibly in combination with the through holes, may also have a positive effect on the type of flow created within the device, which is preferably laminar. The at least one barrier element can for example be positioned at a distance smaller than 10 mm, preferably smaller than 5 mm, more preferably smaller than 2.5 mm from the at least one ventilator. It is also possible that the distance, in particular the smallest distance between the barrier element and the ventilator, in particular the hub and/or the fan blades thereof is smaller than 10 mm, preferably smaller than 5 mm, more preferably smaller than 2.5 mm. The distance can for example be at least 0.1 mm. At least part of the at least one barrier element may be positioned at a central part of the at least one ventilator. Preferably, the area covered by at least one barrier element is smaller than the area covered by the ventilator, in particular the hub and/or fan blades thereof. At least part of at least one barrier element may be positioned substantially parallel to the least one ventilator.

The device may comprise at least one drive for at least driving the at least one ventilator. The drive may also be configured to drive the shaft of the at least one ventilator. At least one drive may for example comprise at least one motor, such as but not limited to an electromotor. The use of an electromotor may allow for precise control of the ventilator speed and may offer benefits such as energy efficiency and quiet operation. The electromotor can for example be a brushless DC electric motor. The device may further comprise at least one control unit. It is conceivable that at least one control unit is configured for controlling the rotational speed of the at least one ventilator. The control unit may for example regulate and/or adjust the rotational speed of the ventilator based on one or more input parameters. For instance, it may be designed to maintain a maximum airflow, for example of 100 m3/hr. Hence, the control unit may be configured to control the rotational speed of the at least one ventilator based on a predetermined air flow of filtered air expelled by the device. The control unit may also adjust the rotational speed of the ventilator based on the end pressure in the closed space, ensuring optimal performance under varying conditions. At least one control unit can also be configured to control the rotational speed of the at least one ventilator based on its capacity. It is for example possible that at least one control unit ensures that the at least one ventilator operates at at least 50% of its maximum capacity, preferably at least 75% more preferably at least 90%.

At least part of the housing may define at least one compartment which is positioned between at least one air channel defined by the at least one filter and at least one air outlet. It is for example possible that at least one compartment is positioned at a rear surface of the at least one ventilator and optionally at a rear surface of the at least one barrier element. The at least one compartment may be configured to receive or house at least part of the electronical components of the device, such as for example a drive and/or control unit. Such compartment benefits from the filtered air to maintain a dust-free environment, potentially extending the lifespan of these (electrical) components.

The device may further comprise at least one prefilter. At least one prefilter is preferably positioned between at least one air inlet and at least one ventilator and which is configured to filter at least part of the air. At least one prefilter can for example be a particulate prefilter. The prefilter according to the invention could also be referred to as secondary filter and/or the (main) filter according to the invention can be referred to as primary filter. At least one prefilter may be a particle filter providing initial filtration of coarse particles. In a possible embodiment, at least one prefilter is housed within the at least one housing. The at least one prefilter may define and/or enclose at least one secondary air channel. The prefilter is preferably configured such that air drawn in by the ventilator is pushed through the prefilter before reaching the main filter. At least part of the at least one prefilter can be received within the at least one housing. The at least one prefilter may define and/or enclose an air channel, in particular a secondary air channel and the at least one housing, and in particular the interior of the at least one housing may be configured such that air drawn into the device by the at least one ventilator is pushed through the at least one prefilter into the (secondary) air channel towards the at least one ventilator. It is for example possible that at least part of at least one prefilter is substantially cylindrical, tubular, spherical and/or conical. The at least one prefilter being a cylindrical and/or conical filter may complement the housing shape, potentially maximizing the prefilter surface area within the given volume. This shape may also promote even air distribution across the prefilter surface, which could enhance filtration efficiency and extend prefilter life. The substantially cylindrically and/or conically shaped prefilter may also enable the formation of at least one secondary air channel in an efficient manner. It is for example possible that the prefilter forms a cylinder around the at least one secondary air channel. At least one secondary air channel may also be defined by the cylindrical and/or conical configuration of at least one prefilter. In an alternative embodiment, the at least one prefilter could be a spiral filter or a spirally shaped filter. The at least one secondary air channel can be formed by the gaps formed between the spiral character of the at least one prefilter. Non-limiting examples of prefilters which could be used are filters which are configured to capture dust particles, pollen, and/or other airborne contaminants. The prefilter can be applied for extending the life of the main (HEPA) filter. In some embodiments, activated carbon prefilters may be employed to adsorb odours, volatile organic compounds (VOCs), and other gaseous pollutants. For environments with high humidity, hydrophobic prefilters may be utilized to prevent moisture from reaching the main filter. In industrial or agricultural settings, specialized prefilters such as oil mist eliminators or chemical-resistant filters may be incorporated. It is for example possible that at least one prefilter comprises at least one F7 filter. Alternatively at least one primary filter may comprise at least one F7 filter. Some prefilters may combine multiple filtration technologies, such as electrostatic precipitation with mechanical filtration, to enhance overall efficiency. In certain applications, washable or reusable prefilters may be preferred for cost-effectiveness and reduced waste. The choice of prefilter may depend on factors such as the specific contaminants present in the environment, the desired level of filtration, and the frequency of maintenance operations.

Both the primary and secondary filter, if applied, may incorporate smart features. At least one filter may include an RFID tag read by a reader allowing users to monitor filter lifespan and potentially enabling IoT connectivity for remote monitoring. Sensors may be applied for identifying and/or classifying filters. These various features and alternatives may offer benefits such as improved performance, easier maintenance, adaptability to different operating conditions, and enhanced user interaction through smart monitoring capabilities.

At least one housing is preferably a substantially airtight housing. In a further possible embodiment the at least one housing is a modular housing. A modular housing facilitates easier maintenance and/or filter replacement. The construction may be designed to prevent incorrect filter installation. The modular housing may further comprise one or more sealing rings and/or washers for providing an air tight connection between housing parts. It is for example possible that the modular housing comprises at least one central section and at least one filter section. In case a prefilter is applied, it is conceivable that the housing comprises at least one central section which is positioned between two filter sections. At least one (primary and/or secondary) filter is preferably removably attached within the at least one housing. This feature may contribute to the overall maintainability and longevity of the device.

The device according to the invention may be constructed from a variety of materials, each selected to optimize performance, durability, and cost-effectiveness. At least part of the housing may be made of at least one polymer and/or metal. The housing may for example be made from high-impact resistant plastics such as ABS (Acrylonitrile Butadiene Styrene) or polycarbonate, which offer excellent strength-to-weight ratios and can withstand potential impacts during use or transportation. For applications requiring higher temperature resistance or chemical inertness, engineering plastics like PEEK (Polyether Ether Ketone) or PPS (Polyphenylene Sulfide) may be employed. In some embodiments, lightweight metals such as aluminum or its alloys might be used for parts of the housing, providing good heat dissipation properties and increased durability. The fan blades may be manufactured from reinforced plastics, such as glass fiber-filled polypropylene offering a balance between strength and flexibility. For the filters, materials may include borosilicate glass fibers for HEPA filters, while prefilters might use polyester or polypropylene fibers. Seals and washers, if applied could be made from elastomers like silicone rubber or EPDM (Ethylene Propylene Diene Monomer) to ensure airtight connections. The choice of materials may vary depending on specific application requirements, such as chemical resistance, operating temperature range, or regulatory compliance for certain industries.

At least one air outlet may for example comprise a duct and/or may be configured to be coupled to at least one duct. At least one air outlet is typically positioned at a distance from at least one air inlet. The outlet may be configured as a single large opening or multiple smaller openings distributed across a section of the housing. These openings may be shaped to reduce turbulence and noise as the filtered air exits the device. At least one outlet may also include a protective grille or mesh to prevent objects from entering the device while allowing unimpeded airflow. In some embodiments, at least one air outlet may be designed to accommodate standard-sized hoses or ducting, facilitating easy integration with existing ventilation systems. The dimensions and shape of the air outlet may be optimized based on computational fluid dynamics simulations to ensure efficient air delivery and maintain the desired overpressure in the protected space. Additionally, the outlet may incorporate sensors to monitor outgoing air quality, pressure, or flow rate, providing valuable data for system control and maintenance scheduling.

The invention also relates to the use of a device according to any of the previous claims.

The invention also relates to a method for filtering air and creating an overpressure in a closed or semi-closed space using a device for filtering air and creating an overpressure in a closed or semi-closed space, said device comprising at least one ventilator for taking in air and at least one filter for filtering air which is drawn into the device, wherein the rotational speed of the at least one ventilator is controlled based on a predetermined flow rate of filtered air expelled from the device.

The invention in particular relates to a method for filtering air and creating an overpressure in a closed or semi-closed space using a device according to the present invention, wherein the rotational speed of the at least one ventilator is controlled based on a predetermined flow rate of filtered air expelled from the device.

Any of the embodiments described for the device also apply to the method according to the invention and vice versa.

The invention will be further elucidated based on the following non-limitative clauses.
1. Device for filtering air and creating an overpressure in a closed or semi-closed space, comprising:
   - at least one housing, comprising at least one air inlet and at least one air outlet;
   - at least one ventilator for taking in air via the at least one air inlet; and
   - at least one filter for filtering air which is drawn into the device;

   wherein the at least one ventilator and the at least one filter are received within the at least one housing,
   wherein the at least one filter encloses at least one air channel and wherein the at least one housing is configured such that air drawn into the device by the at least one ventilator is pushed through the at least one filter into the air channel towards the at least one air outlet.
2. Device according to any of the previous clauses, wherein at least part of the at least one housing is substantially cylindrically and/or conically shaped.
3. Device according to any of the previous clauses, wherein at least part of at least one filter is substantially cylindrical and/or conical.
4. Device according to clauses 2 and 3, wherein an outer surface of the at least one filter is positioned at a distance from an inner surface of the at least one housing.
5. Device according to any of the previous clauses, wherein at least one filter comprises a HEPA filter.
6. Device according to any of the previous clauses, wherein at least one air inlet extends over a circumference of the at least one housing.
7. Device according to any of the previous clauses, wherein at least one air inlet is formed by a radially extending slit formed by at least part of the at least one housing.
8. Device according to any of the previous clauses, wherein at least one ventilator is an axial ventilator.
9. Device according to any of the previous clauses, wherein at least one ventilator comprises at least one fan blade and preferably multiple fan blades.
10. Device according to clause 9, wherein at least part of the fan blades are positioned under an angle such that drawn in air is guided towards the outer circumference of the interior of the housing.
11. Device according to clause 9 or 10, wherein the at least one ventilator comprises at least one hub and wherein at least one hub and/or at least one fan blade comprises multiple through holes.
12. Device according to any of the previous clauses, comprising at least one barrier element positioned at a distance from the at least one ventilator.
13. Device according to clause 12, wherein the at least one barrier element is positioned at a distance smaller than 10 mm, preferably smaller than 5 mm, more preferably smaller than 2.5 mm from the at least one ventilator.
14. Device according to clause 12 or 13, wherein at least part of the at least one barrier element is positioned at a central part of the at least one ventilator.
15. Device according to any of clauses 12-14, wherein at least part of at least one barrier element is positioned substantially parallel to the least one ventilator.
16. Device according to any of the previous clauses, comprising at least one drive for driving the at least one ventilator.
17. Device according to any of the previous clauses, comprising at least one control unit for controlling the rotational speed of the at least one ventilator.
18. Device according to any of the previous clauses, wherein the at least one control unit is configured to control the rotational speed of the at least one ventilator based on its capacity.
19. Device according to any of the previous clauses, wherein at least part of the housing defines a compartment which is positioned between at least one air channel defined by the at least one filter and at least one air outlet.
20. Device according to any of the previous clauses, comprising at least one prefilter positioned between at least one air inlet and at least one ventilator and configured to filter at least part of the air.
21. Device according to clause 20, wherein at least one prefilter is received within the at least one housing.
22. Device according to clause 20 or 21, wherein the at least one prefilter encloses an air channel and wherein the at least one housing is configured such that air drawn into the device by the at least one ventilator is pushed through the at least one prefilter into the air channel towards the at least one ventilator.
23. Device according to any of the previous clauses, wherein the at least one housing is a modular housing.
24. Device according to any of the previous clauses, wherein at least one filter is removably attached within the at least one housing.
25. Use of a device according to any of the previous clauses.
26. Method for filtering air and creating an overpressure in a closed or semi-closed space using a device for filtering air and creating an overpressure in a closed or semi-closed space, preferably a device according to any of clauses 1-24, said device comprising at least one ventilator for taking in air and at least one filter for filtering air which is drawn into the device, wherein the rotational speed of the at least one ventilator is controlled based on a predetermined flow rate of filtered air expelled from the device.

The invention will be further elucidated by means of non-limiting exemplary embodiments illustrated in the following figures, in which:
- figures 1a and 1b show a possible embodiment of a device according to the present invention;
- figure 2 shows a cross sectional view of the device shown in figures 1a and 1b;
- figures 3a-3d show the ventilator and the barrier element as shown in figures 1a-2 in more detail; and
- figure 4 shows part of the housing of a device according to the present invention.

Within these figures, similar reference numbers correspond to similar or equivalent elements or features.

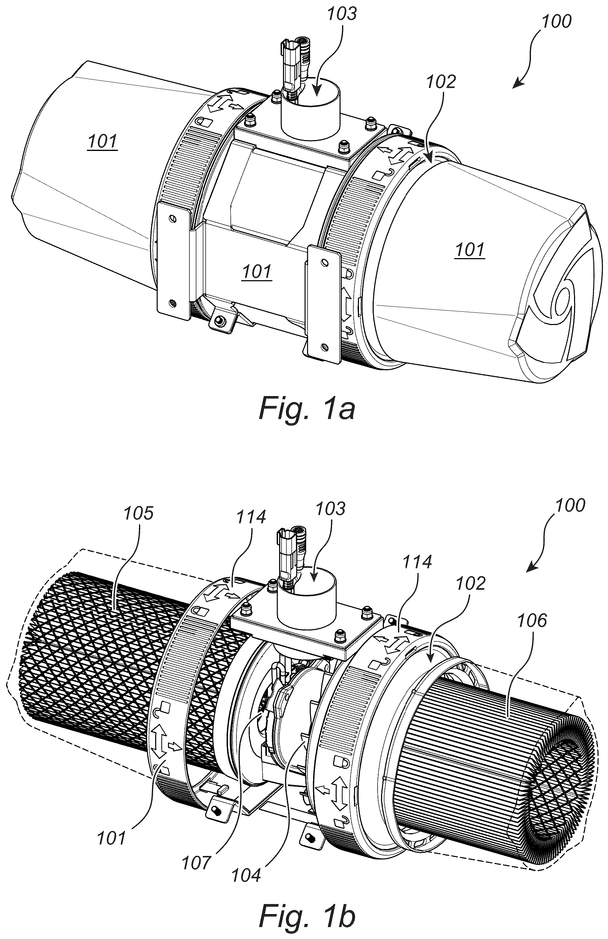

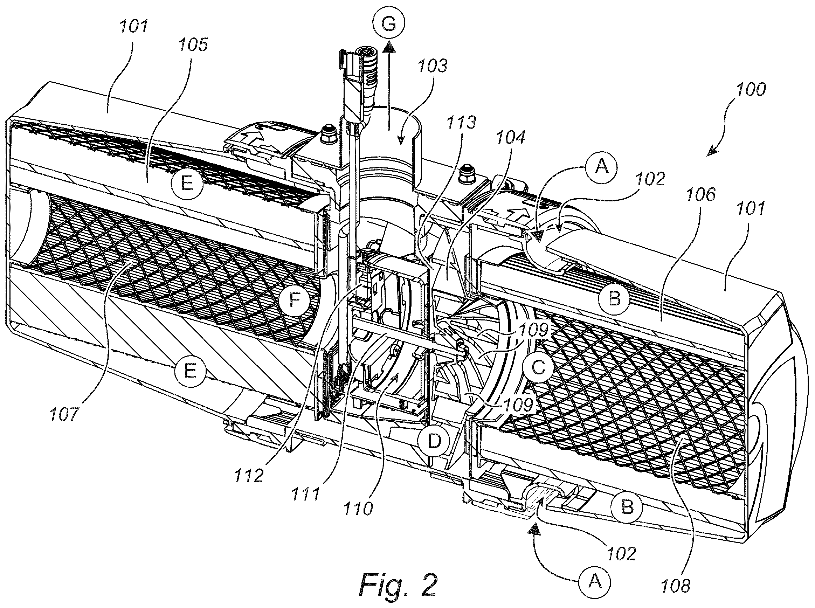

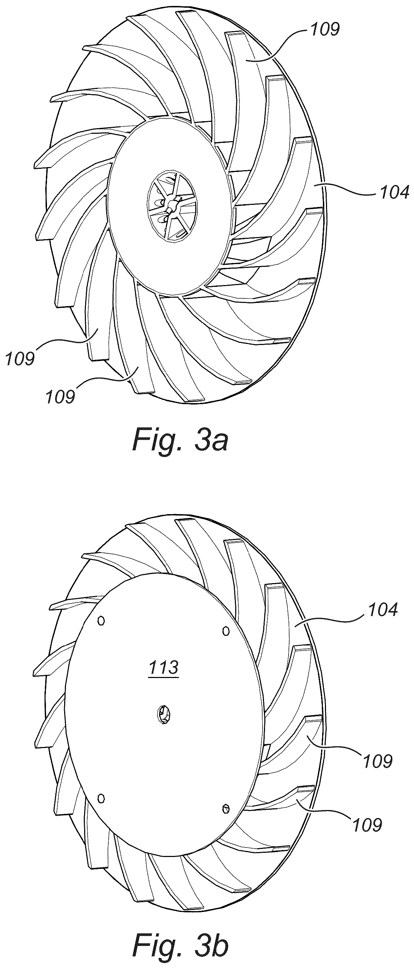

Figures 1a and 1b show a perspective view of a possible embodiment of a device 100 according to the present invention. In figure 1b, parts of the device 100 are hidden or made transparent. The device 100 is configured for filtering air and/or creating an overpressure in a closed or semi-closed space, such as but not limited to a vehicle cabin (not shown). The device 100 comprises a housing 101, comprising at least one air inlet 102 and at least one air outlet 103. The device 100 further comprises a ventilator 104 for taking in air via the at least one air inlet 102. The ventilator 104 is shown in more detail in figures 3a-3d. The device 100 comprises a filter 105 for filtering air which is drawn into the device 100. A prefilter 106 is present to filter the air prior to it be pushed through the main filter 105. In practice, such prefilter is optional. As can be seen in the figures, in the shown embodiment, the ventilator 104, the filter 105 and the prefilter 106 are received within the housing 101. It can be seen that the filter 105 and the prefilter 106 are positioned at opposing sides of the ventilator 105. The pathway of the air which is drawn into the device is schematically shown in the cross sectional view of the device as shown in figure 2. It can be seen that the filter 105 encloses at least one air channel 107. The housing 101 is configured such that air drawn into the device 100 by the at least one ventilator 104 is pushed through the filter 105 into the air channel 107 towards the air outlet 103. The housing 101 is substantially cylindrically and conically shaped and is of a modular configuration. The connecting members 114 forming part of the housing 101 enable that the (pre)filters 105, 106 can be easily removed for maintenance and/or replacement.

Figure 2 shows a cross sectional view of the device 100 shown in figures 1a and 1b. The ventilator 104, filter 105 and optional prefilter 106 are received within the housing 101. The housing 101 comprises an air inlet 102 and an air outlet 103, and in the figure it is indicated with arrows how air travels from the air inlet 102, through the prefilter 106, ventilator 104 and filter 105 towards the air outlet 103. The letter codes A-G indicates the different steps and locations in the filtering procedure. At step A, air is drawn into the air inlet 102. The air inlet 102 extends over a circumference of the housing 101. More specifically, the air inlet 102 is provided in the form of a radially extending slit. The air inlet 102 is formed by the shape of the housing 101. In the shown embodiment, the air inlet 102 is an uninterrupted slit. It is possible that the air inlet 102 is interrupted at some parts and/or that multiple air inlets are present. The protective configuration of the housing 101 enables that the radially extending slit as shown has the benefit that water cannot easily get trapped in the air inlet 102. At point B, the drawn in air is filtered by the prefilter 106. The prefilter 106 encloses a secondary air channel 108. The air which is drawn into the device 100 by the ventilator 104 is first drawn into the air channel 108 of the prefilter towards the ventilator 104. The air is then drawn into the fan blades 109 of the ventilator 104 at location C. The configuration of the prefilter 106 and housing 101 enable that the air flow will be substantially laminar at this location. The ventilator 104 is an axial ventilator 104 and comprises multiple fan blades 109. The fan blades 109 are positioned under an angle such that drawn in air is guided towards the outer circumference of the interior of the housing 101 surrounding the filter 105. This is for example seen at location D. It can be seen that on the upper side of the device 100, the air has to flow around the part of the housing 101 which forms the air outlet 103. Subsequently, the air is pushed into the filter 105, which is a HEPA filter in the present embodiment. This is seen at location E, where the air is radially pushed towards and through the filter 105. The filtered air will then enter the air channel 107 which is defined by the filter 105. Subsequently, the air will be pushed towards the air outlet 103, at location G, via the a compartment 110 defined by the housing 101. The compartment 110 is positioned between the air channel 107 defined by the filter 107 and the air outlet 103. The ventilator 104 is rotated via its shaft 111 being connected to a drive 112, in particular an electromotor. The figure shows that the housing 101 forms integral part of the device 100. In the shown embodiment, both the prefilter 106 and the filter 105 are substantially tubular. The tubular, or cylindrical configuration enables that an air channel 107, 108 is formed inside the filters 105, 106. The outer surfaces of the filter 105 and prefilter 106 are positioned at a distance from an inner surface of the housing 101. Parallel to the ventilator 104, a barrier element 113 is present. The barrier element 113 is positioned at a distance from the ventilator 104. The barrier element 113 provides a barrier for the compartment 110. The barrier element 113 also contributes to the balanced rotation of the ventilator 104 and in particular the fan blades 109 thereof.

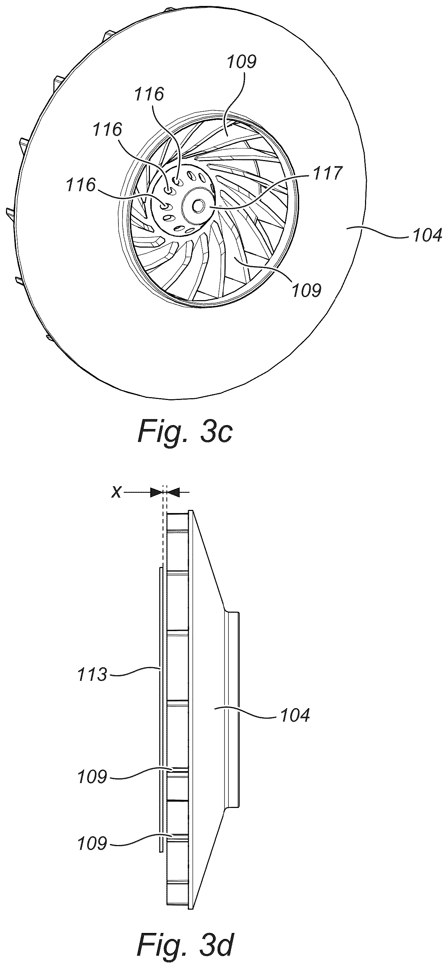

Figures 3a-3d show the ventilator 104 and the barrier element 113 as shown in figures 1a-2 in more detail. Figure 3a shows a perspective view of only the ventilator 104 seen from a rear side. Figure 3b shows the ventilator 104 in combination with the barrier element 113. Figure 3c shows the assembly of figure 3b from a front side. Figure 3d shows a side view of the ventilator 104 and the barrier element 113. The figures show that the fan blades 109 are curved and positioned in an angled configuration. This results in that the fan blades 109 push the air towards the outer area of the housing 101. The distance x between the ventilator 104 and the barrier element 113 is in the shown configuration defined as the smallest distance between said components. The distance x is preferably in the range of 1 to 10 mm. The barrier element 113 is positioned at a central part of the ventilator 104, in particular such that in an assembled configuration as shown in figure 2, surrounds the shaft which drives the ventilator 104. The ventilator 104, and in particular the hub 117 thereof, comprises multiple through holes 116. It was experimentally found that in particular the combination of the through holes 116 and the barrier element 113 resulted in the balance of the device 100 and in particular the ventilator 104 thereof being significantly improved.

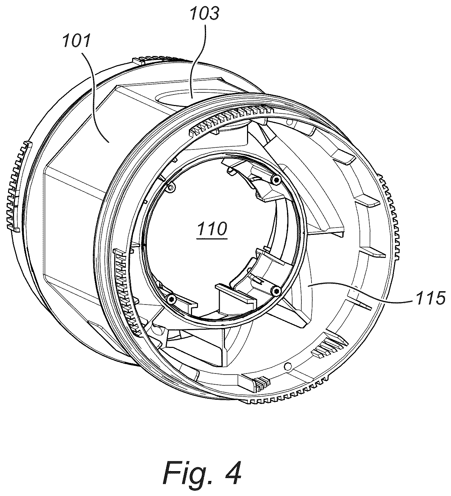

Figure 4 shows part of the housing 101 which defines the compartment 110. The housing 101 is configured to further guide the air which is pushed out of the ventilator 104 on the outer side of it and the inner side is configured to guide the air towards the air outlet 103. The interior of the outer tubular part of the central part of the housing 101 comprises a structured configuration 115 which follows the shape of the fan blades (not shown). The housing part as shown is configured to be connected to the barrier element as shown in figures 3b-3d.

It will be clear that the invention is not limited to the exemplary embodiments which are illustrated and described here, but that countless variants are possible within the framework of the attached claims, which will be obvious to the person skilled in the art. In this case, it is conceivable for different inventive concepts and/or technical measures of the above-described variant embodiments to be completely or partly combined without departing from the inventive idea described in the attached claims.

The verb 'comprise' and its conjugations as used in this patent document are understood to mean not only 'comprise', but to also include the expressions 'contain', 'substantially contain', 'formed by' and conjugations thereof.

## Claims

1. Device (100) for filtering air and creating an overpressure in a closed or semi-closed space, comprising:
- at least one housing (101), comprising at least one air inlet (102) and at least one air outlet (103);
- at least one ventilator (104) for taking in air via the at least one air inlet (102); and
- at least one filter (105) for filtering air which is drawn into the device (100);
wherein the at least one ventilator (104) and the at least one filter (105) are received within the at least one housing (101),
wherein the at least one filter (105) encloses at least one air channel (107) and wherein the at least one housing (101) is configured such that air drawn into the device (100) by the at least one ventilator (104) is pushed through the at least one filter (105) into the air channel (107) towards the at least one air outlet (103),
wherein at least one air inlet (102) is formed by a radially extending slit formed by at least part of the at least one housing (101).

2. Device (100) according to claim 1, wherein at least part of the at least one housing (101) is substantially cylindrically and/or conically shaped and wherein at least part of at least one filter (105) is substantially cylindrical and/or conical.

3. Device (100) according to claim 2, wherein an outer surface of the at least one filter (105) is positioned at a distance from an inner surface of the at least one housing (101).

4. Device (100) according to any of the previous claims, wherein at least one filter (105) comprises a HEPA filter.

5. Device (100) according to any of the previous claims, wherein at least one air inlet (102) extends over a circumference of the at least one housing (101).

6. Device (100) according to any of the previous claims, wherein at least one ventilator (104) is an axial ventilator (104) and comprises at least one fan blade (109) and preferably multiple fan blades (109).

7. Device (100) according to claim 6, wherein at least part of the fan blades (109) are positioned under an angle such that drawn in air is guided towards the outer circumference of the interior of the housing (101) and wherein the at least one ventilator (104) comprises at least one hub (117) and wherein at least one hub (117) and/or at least one fan blade (109) comprises multiple through holes (116).

8. Device (100) according to any of the previous claims, comprising at least one barrier element (113) positioned at a distance from the at least one ventilator (104).

9. Device (100) according to claim 8, wherein the at least one barrier element (113) is positioned at a distance smaller than 10 mm, preferably smaller than 5 mm, more preferably smaller than 2.5 mm from the at least one ventilator (104).

10. Device (100) according to claim 8 or 913, wherein at least part of the at least one barrier element (113) is positioned at a central part of the at least one ventilator (104) and/or wherein at least part of at least one barrier element (113) is positioned substantially parallel to the least one ventilator (104).

11. Device (100) according to any of the previous claims, wherein at least part of the housing (101) defines a compartment (110) which is positioned between at least one air channel (107) defined by the at least one filter (105) and at least one air outlet (103).

12. Device (100) according to any of the previous claims, comprising at least one prefilter (106) positioned between at least one air inlet (102) and at least one ventilator (104) and configured to filter at least part of the air and wherein the at least one prefilter (106) is received within the at least one housing (101).

13. Device (100) according to claim 12, wherein the at least one prefilter (106) encloses an air channel (108) and wherein the at least one housing (101) is configured such that air drawn into the device by the at least one ventilator (104) is pushed through the at least one prefilter (106) into the air channel (108) towards the at least one ventilator (104).

14. Device (100) according to any of the previous claims, wherein the at least one housing (101) is a modular housing (101) and/or wherein at least one filter (105, 106) is removably attached within the at least one housing (101).

15. Method for filtering air and creating an overpressure in a closed or semi-closed space using a device (100) for filtering air and creating an overpressure in a closed or semi-closed space according to any of the previous claims, wherein the rotational speed of the at least one ventilator (104) of the device (100) is controlled based on a predetermined flow rate of filtered air expelled from the device (100).
